(19) Europäisches Patentamt
European Patent Office
Office européen des brevets

(11) **EP 2 744 672 B1**

(12) **FASCICULE DE BREVET EUROPEEN**

(45) Date de publication et mention de la délivrance du brevet:
**16.12.2015 Bulletin 2015/51**

(21) Numéro de dépôt: **12750423.1**

(22) Date de dépôt: **19.07.2012**

(51) Int Cl.:
***B60C 23/06*** (2006.01)

(86) Numéro de dépôt international:
**PCT/FR2012/051712**

(87) Numéro de publication internationale:
**WO 2013/024220 (21.02.2013 Gazette 2013/08)**

(54) **PROCEDE D'ESTIMATION DE LA RESISTANCE AU ROULEMENT D'UNE ROUE DE VEHICULE AUTOMOBILE ET DISPOSITIF POUR METTRE EN OEUVRE CE PROCEDE**

VERFAHREN ZUR SCHÄTZUNG DES ROLLWIDERSTANDES EINES RADES EINES KRAFTFAHRZEUGS UND VORRICHTUNG ZUR DURCHFÜHRUNG DIESES VERFAHRENS

METHOD OF ESTIMATING THE ROLLING RESISTANCE OF A WHEEL OF A MOTOR VEHICLE AND DEVICE TO IMPLEMENT THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.08.2011 FR 1157378**

(43) Date de publication de la demande:
**25.06.2014 Bulletin 2014/26**

(73) Titulaire: **Renault S.A.S.**
**92100 Boulogne-Billancourt (FR)**

(72) Inventeurs:
• **EL TANNOURY, Charbel**
  **F-78000 Versailles (FR)**
• **PITA-GIL, Guillermo**
  **F-78180 Montigny-le-Bretonneux (FR)**

(56) Documents cités:
**EP-A2- 1 037 030      FR-A1- 2 938 468**
**US-A1- 2004 225 423**

**Description**

L'invention a pour objet les procédés de surveillance de la pression de gonflage des pneumatiques d'un véhicule, par exemple d'un véhicule automobile.

Pour des questions de sécurité, de plus en plus de véhicules sont dotés de dispositifs permettant d'alerter le conducteur en cas de sous-gonflage des pneumatiques ou en cas de crevaison d'un des pneumatiques. Des réglementations prévoient ainsi d'équiper les véhicules de systèmes de détection aptes à déceler une chute de pression d'un pneu supérieure à 20% de sa valeur nominale, en moins de 1 minute si la chute de pression concerne un seul pneu, et en moins d'une heure si la chute de pression concerne les pneus de plusieurs roues différentes.

De tels dispositifs peuvent comprendre un capteur de pression intégré aux pneumatiques mêmes, ou des jauges de contrainte placées à des endroits sur lesquels se répercutent les efforts transmis par les pneumatiques, par exemple au niveau d'une bague de roulement d'une roue du véhicule, comme dans la demande de brevet FR 2 938 468. Le document E1 037 030 A2 décrit de son coté un modèle du pneumatique mais dans un contexte autre qu'un système de surveillance de gonflage.

Les capteurs de pression ou les jauges de contrainte représentent en eux-mêmes un coût non négligeable, et nécessitent en outre de mettre en place des câblages dédiés, ou des systèmes de transmission à distance, qui renchérissent encore le dispositif dans son ensemble.

L'invention a pour objet un procédé de surveillance de la pression de gonflage, qui permette d'estimer cette pression de gonflage à partir de données déjà disponibles sur la plupart des véhicules, par exemple sur les véhicules équipés au minimum d'un système de type ABS (Antiblockiersystem).

L'invention a pour but de proposer un système d'estimation fiable et robuste, capable d'estimer une grandeur caractéristique de la pression de gonflage par des opérations mathématiques simples (addition, multiplication, division).

A cette fin, un dispositif d'estimation de la résistance au roulement d'une roue de véhicule automobile, comprend un calculateur configuré pour calculer pendant le roulage du véhicule, une valeur instantanée de résistance au roulement. Cette valeur instantanée de résistance au roulement est calculée comme un polynôme à coefficients constants de valeurs d'entrées du calculateur, parmi lesquelles un couple moteur appliqué aux roues du véhicule, une vitesse linéaire du véhicule, une vitesse angulaire de rotation de la roue, une accélération linéaire du véhicule, et une accélération angulaire de la roue. De manière préférentielle, le véhicule comporte deux roues motrices et deux roues non motrices, et le calculateur est configuré pour estimer la résistance au roulement d'au moins une roue motrice, et de préférence pour estimer une valeur distincte de résistance au roulement pour chacune des roues motrices. Selon un mode de réalisation avantageux, la vitesse linéaire du véhicule peut être estimée à partir de la vitesse de rotation d'au moins une roue du véhicule, de préférence une roue non motrice. Avantageusement, la vitesse linéaire peut être estimée à partir de la moyenne arithmétique des vitesses de rotation de deux roues non motrices du véhicule. L'accélération linéaire du véhicule peut alors être obtenue en dérivant la vitesse linéaire ainsi estimée.

Selon un mode de réalisation préféré, le polynôme est la somme d'une combinaison linéaire des variables d'entrée autres que la vitesse linéaire, et d'un polynôme de la vitesse linéaire comprenant au moins un terme d'exposant 2.

Avantageusement, le calculateur est configuré pour utiliser comme valeur d'entrée pour l'estimation de la valeur instantanée de résistance au roulement d'une roue motrice du véhicule, une vitesse linéaire qui est obtenue en multipliant la moyenne des vitesses angulaires de deux roues non motrices du véhicule, par un coefficient constant. Selon les modes de réalisation, le calculateur peut être configuré pour utiliser une accélération linéaire qui est obtenue par dérivations de la vitesse linéaire, ou une accélération linéaire qui est obtenue à partir des mesures d'un accéléromètre, par exemple un accéléromètre faisant partie d'un dispositif de type ESP. Avantageusement, le couple moteur appliqué aux roues du véhicule, la vitesse linéaire du véhicule, la vitesse angulaire de rotation de la roue, l'accélération linéaire du véhicule et l'accélération angulaire de la roue sont les seules variables d'entrée utilisées par le calculateur, outre certains paramètres de calcul constants mis en mémoire dans le calculateur avant le début de l'estimation. Selon une autre variante de réalisation, les variables d'entrée comprennent également le sinus d'un angle d'une pente de la route parcourue par le véhicule.

Selon un mode de réalisation préférentiel, le calculateur est configuré pour calculer de manière itérative une résistance au roulement filtrée, à partir d'une seule valeur filtrée de résistance au roulement calculée au pas de calcul précédent, et à partir d'une valeur instantanée de résistance au roulement, réactualisée depuis le dernier calcul de valeur filtrée.

Le calculateur peut par exemple être configuré pour calculer la résistance filtrée au roulement de manière itérative, la résistance filtrée estimée à un pas de calcul (k) étant égale à la somme du polynôme des variables d'entrée actualisées, multiplié par un facteur de récursivité, et de la résistance filtrée estimée au pas de calcul (k-1) précédent, multiplié par le complément à un de ce facteur de récursivité.

Avantageusement, le facteur de récursivité au pas de calcul courant, est calculé comme le quotient du facteur de récursivité au pas de calcul précédent, par la somme d'un facteur d'oubli constant et du facteur de récursivité obtenu au pas de calcul précédent.

Selon un mode de réalisation préféré, le facteur d'oubli est compris entre 0,9 et 1.

Selon un mode de réalisation avantageux, le calculateur est configuré pour initialiser le facteur de récursivité à une valeur comprise entre zéro et 0,1 au début d'une procédure d'évaluation de la résistance au roulement. Le début de la procédure d'évaluation peut par exemple correspondre au moment où est émis un signal d'initialisation déclenché par un opérateur du véhicule, par exemple en appuyant sur une zone de commande dédiée du tableau de bord. Le début de la procédure d'évaluation peut également correspondre à un démarrage du véhicule.

Selon un autre aspect, un dispositif de surveillance de l'état de gonflage du pneumatique d'une roue de véhicule automobile, comprend un dispositif d'estimation de la résistance au roulement de la roue tel que décrit précédemment, et comprend un dispositif d'alerte configuré pour émettre un signal d'alerte si la résistance au roulement estimée devient supérieure ou égale à une valeur seuil. Le dispositif peut également être configuré pour émettre un signal d'alerte si la différence entre les résistances au roulement de deux roues motrices du véhicule devient supérieure en valeur absolue à une différence seuil.

Selon encore un autre aspect de l'invention, dans un procédé d'estimation de la résistance au roulement d'une roue de véhicule automobile, on évalue une valeur filtrée de résistance au roulement à partir d'un couple appliqué aux roues du véhicule, d'une vitesse linéaire du véhicule, d'une accélération linéaire du véhicule, de la vitesse angulaire de rotation de la roue du véhicule, et de l'accélération angulaire de la roue. On estime pour cela une valeur théorique instantanée de la résistance au roulement en fonction d'une valeur instantanée de chacune des données d'entrée précédentes, puis on calcule une valeur filtrée de résistance au roulement comme un barycentre à coefficients récursifs, entre la valeur théorique instantanée de la résistance et la valeur filtrée de résistance obtenue au pas de calcul précédent. Les valeurs instantanées des données d'entrées peuvent elles-mêmes être des données filtrées ou non filtrées.

Lors de l'application de ce procédé, on peut utiliser la valeur filtrée de résistance au roulement pour surveiller l'état de gonflage du pneumatique de la roue.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 illustre un véhicule équipé d'un dispositif de surveillance selon l'invention,
- la figure 2 est une illustration d'un processus itératif d'estimation mis en oeuvre dans un procédé selon l'invention.

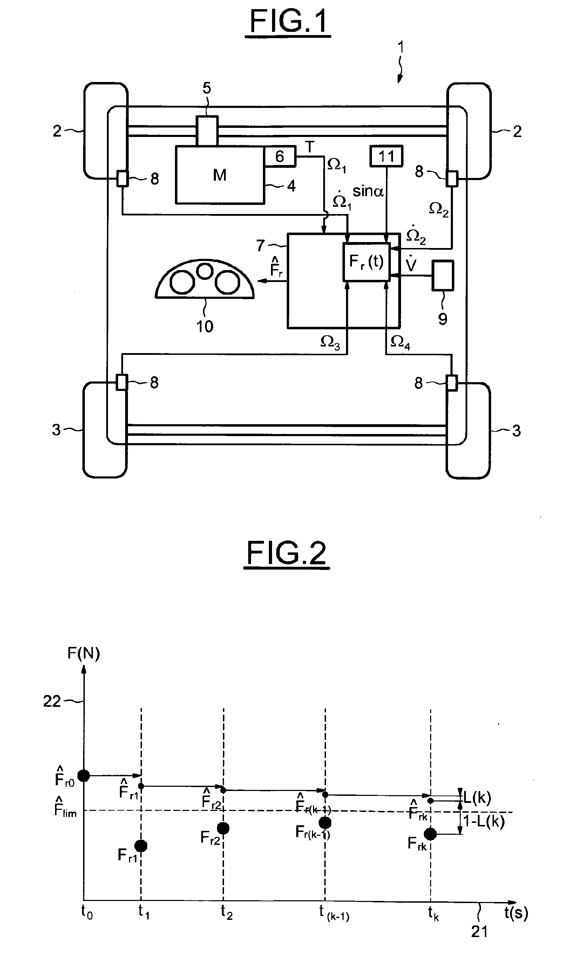

Tel qu'illustré sur la figure 1, un véhicule 1 équipé d'un dispositif selon l'invention comporte deux roues avant motrices 2, deux roues arrière non motrices 3, un moteur 4, une boîte de vitesses 5, une unité 6 de gestion du moteur, un calculateur 7, un capteur 8 d'un dispositif de type "ABS" ("Antiblockiersystem") apte à mesurer la vitesse angulaire de rotation de chacune des quatre roues, un capteur 9 d'un dispositif de type « ESP » (Electronic Stability Program / Elektronisches Stabilitäts-Programm) comportant un accéléromètre apte à déterminer l'accélération longitudinale du véhicule, et un dispositif d'alerte 10 relié à un tableau de bord. Selon les variantes de réalisation, le dispositif peut comprendre un estimateur 11 de la pente de la route parcourue par le véhicule.

Le calculateur 7 est relié à l'unité de gestion de moteur 6 par une connexion lui transmettant une valeur T de couple total transmis par le moteur 4 via la boîte de vitesses 5 aux deux roues avant 2 du véhicule. Le calculateur 7 est relié au capteur ABS 8 par quatre connexion lui transmettant respectivement les vitesses instantanée de rotation $\Omega_1$ et $\Omega_2$ des roues motrices et les vitesses instantanées de rotation $\Omega_3$ et $\Omega_4$ des roues non motrices. Le capteur ABS peut éventuellement transmettre également au calculateur 7, les accélérations angulaires $\dot{\Omega}_1$ et $\dot{\Omega}_2$ obtenues en dérivant les vitesses angulaires des roues motrices 2. Le calculateur peut, selon d'autres variantes de réalisation, calculer lui-même les accélérations angulaires $\dot{\Omega}_1$ et $\dot{\Omega}_2$ en dérivant les vitesses angulaires correspondantes. On considère, dans les deux cas de figure, que le calculateur reçoit comme données d'entrée à la fois les vitesses angulaires $\Omega_1, \Omega_2$, et les accélérations angulaires $\dot{\Omega}_1$ et $\dot{\Omega}_2$.

Le calculateur 7 est connecté au capteur ESP 9 par une connexion lui transmettant l'accélération linéaire $\dot{v}$ du véhicule.

Le calculateur peut également être relié à l'estimateur 11 de pente de la route parcourue.

On décrit dans ce qui suit comment le calculateur est programmé pour évaluer par exemple la résistance au roulement de la roue motrice avant droite, de vitesse et d'accélération angulaires respectivement égales à $\Omega_2$ et à $\dot{\Omega}_2$.

A des intervalles de temps $t_1, t_2, t_3...t_k$, le calculateur 7 détermine une valeur théorique instantanée de résistance au roulement $F_{rk}(t_k)$ par une formule du type suivant :

$$F_{ri}(t) = \frac{1}{R}\left(\tau - C_f\Omega - J\dot{\Omega}\right) - Av^2 - M\dot{v} - Mg\sin\alpha \qquad \text{Equation (1)}$$

où : t est l'instant d'un ième pas de calcul,

$F_{ri}$ est la valeur théorique instantanée de résistance au roulement à l'instant t,

R est le rayon extérieur moyen des roues, supposé constant,

$\tau$ est le couple appliqué à la roue motrice, soit $\tau = T/2$,

$\Omega_2 = \Omega_2$ est la vitesse de rotation de la roue, $v = R \dfrac{\Omega_3 + \Omega_4}{2}$ est la vitesse linéaire du véhicule, recalculée à partir des vitesses de rotation des roues non motrices, afin que les vitesses de rotation utilisées ne soient pas affectées par le glissement des roues motrices,

$\dot{v}$ est l'accélération linéaire du véhicule, mesurée par le capteur ESP, ou, suivant les variantes de réalisation, si le véhicule n'est équipé ni de dispositif ESP ni d'accéléromètre, obtenue en dérivant $v$,

$\dot{\Omega} = \dot{\Omega}_2$ est l'accélération angulaire de la roue motrice.

$C_f$ est un coefficient de frottement visqueux de chaque roue,

J est l'inertie en rotation d'une roue,

A est un coefficient aérodynamique permettant de calculer la force aérodynamique $F_d$ s'opposant à la progression du véhicule, sous la forme $F_d = A\,v^2$,

M est la masse d'une portion du véhicule supportée par la roue,

g est l'accélération de la pesanteur, et

$\alpha$ est la pente de la route par rapport à l'horizontale, comptée positivement quand le véhicule est en montée,

Le terme $\sin\alpha$ peut être omis si le véhicule n'est pas doté d'un système d'estimation de la pente de la route.

L'équation (1) est obtenue par l'application de la deuxième loi de Newton à un système constitué par la roue motrice concernée et la portion de masse M du véhicule supportée par cette roue :

$$J\dot{\Omega} = \tau - RF_{prop} - C\Omega \qquad \text{Equation (2)}$$

sur les moments

$$M\dot{V} = F_{prop} - Av^2 - F_{ri} - Mg\sin\alpha \qquad \text{Equation (3)}$$

sur les forces

puis, en éliminant la force de traction $F_{prop}$ entre les équations (2) et (3), le calculateur 7 détermine comme suit une valeur filtrée $\hat{F}_{rk}$ de résistance au roulement de la roue motrice :

$$\hat{F}_{rk} = \big[1 - L(k)\big]\hat{F}_{r(k-1)} + L(k)F_{rk} \qquad \text{Equation (4)}$$

où :

$\hat{F}_{rk}$ est la valeur filtrée calculée à l'étape de calcul courante,

$\hat{F}_{r(k-1)}$ est la valeur filtrée calculée à l'étape de calcul précédente, et L(k) est un facteur de récursivité associé au k-ième pas de calcul, calculé à partir du facteur de récursivité L(k-1) par la formule suivante :

$$L(k) = \frac{L(k-1)}{\lambda + L(k-1)} \qquad \text{Equation (5)}$$

où :

$\lambda$ est un facteur d'oubli de valeur constante.

Pour que le résultat de l'équation (4) converge dans les conditions de mesure constatées sur les véhicules de tourisme les plus courants, on choisit de manière avantageuse une valeur de $\lambda$ proche de 1 par valeur inférieure, par exemple $\lambda = 0{,}99$ et une valeur initiale L(0) proche de 0 par valeur supérieure par exemple égale à 0,001. La valeur filtrée initiale $\hat{F}_{r0}$ peut être prise proche d'une valeur de résistance au roulement constatée pour ce type de véhicule, faiblement chargé et avec les pressions des pneus fixées à la valeur nominale. A titre indicatif, une telle valeur peut par exemple être proche de 70 N pour un véhicule de tourisme.

Le tableau ci-dessous donne quelques exemples de valeurs utilisées dans le cadre de l'estimation de la résistance au roulement d'un véhicule de type berline familiale

| Paramètre | Valeur | Unité |
|-----------|--------|-------|
| $J$ | 1,6 | $kg.m^2$ |
| $R$ | 0,31 | m |
| $M$ | 440 | kg |
| $A_d$ | 0,65/4 | $m^2$ |
| $\rho$ | 1,205 | $kg.m^{-3}$ |
| $F_{r[0]}$ | 70 | N |
| $C_f$ | 0,08 | $kg.m^2.s^{-1}$ |
| $C_d$ | 0,25 | |
| $L[0]$ | 0,001 | |
| $\lambda$ | 0,99 | |

La figure 2 illustre par un graphe 20 les étapes d'évaluation de valeurs filtrées successives $\hat{F}_{rk}$. Les abscisses représentent l'axe du temps t, où sont représentés différents instants $t_1$, $t_2$, $t_3$, $t_4$ auxquels sont acquises les valeurs de mesures nécessaires pour l'estimation de la valeur de résistance instantanée au roulement $F_{rk}$ selon l'équation (1), à partir de valeurs mesurées ou estimées de couple, de vitesses et d'accélérations T, $\Omega$, $\dot{\Omega}$, v et $\dot{v}$. A un instant initial $t_0$, la valeur filtrée $\hat{F}_r$ est initialisée à une valeur $\hat{F}_{r0}$. A un instant de calcul $t_1$, une valeur $F_{r1}$ de résistance est estimée à l'aide de l'équation (1), et une valeur filtrée $\hat{F}_{r1}$ est calculée comme un barycentre entre la valeur initiale $\hat{F}_{r0}$ et la valeur calculée $F_{r1}$.

A l'instant $t_2$ suivant, une valeur de résistance instantanée $F_{r2}$ est calculée suivant l'équation (1) à partir de nouvelles valeurs mesurées ou estimées de couple, de vitesses et d'accélérations T, $\Omega$, $\dot{\Omega}$, v et v. Une nouvelle valeur filtrée $\hat{F}_{r2}$ est calculée comme un barycentre de la valeur filtrée précédente $\hat{F}_{r1}$ et de la valeur instantanée courante $F_{r2}$.

A l'instant $t_k$, une nouvelle valeur instantanée $F_{rk}$ est calculé à partir d'une nouvelle série d'acquisitions de valeurs de couple, de vitesses et d'accélérations. Une nouvelle valeur filtrée $\hat{F}_{rk}$ est déterminée comme barycentre de la valeur filtrée précédente $\hat{F}_{r(k-1)}$ et de la valeur théorique courante $F_{rk}$. Les coefficients du barycentre sont, à chaque itération, obtenus grâce à l'équation (5), à partir des coefficients du barycentre utilisés à l'étape précédente.

Les valeurs filtrées $\hat{F}_{rk}$ convergent vers une valeur $\hat{F}_{lim}$.

Le processus itératif peut être réinitialisé, c'est-à-dire les valeurs L(0) et $\hat{F}_{r0}$ peuvent être réinitialisées à des valeurs présentes en mémoire dans le calculateur, soit après un gonflage des pneumatiques, soit après un chargement ou un déchargement d'une masse conséquente dans ou hors du véhicule et/ou lors de chaque redémarrage du véhicule. L'initialisation peut par exemple être déclenchée au moyen d'une commande actionnée par le conducteur, ou par un opérateur s'occupant du véhicule. Le processus pourrait également être réinitialisé de manière plus fréquente, par exemple à chaque démarrage du véhicule.

Sauf variation très rapide de la pression d'un des pneumatiques (par exemple par crevaison du pneumatique) le résultat de la suite d'itération définie par les équations (4) et (5) converge rapidement vers une valeur filtrée $\hat{F}_{lim}$ proche de la valeur effective moyenne de résistance au roulement des quatre roues. Sur une berline familiale roulant à 40km/h avec un pneu volontairement dégonflé, on a constaté une convergence du calcul après 35s environ.

Le calculateur 7, une fois que le nombre k de pas de calcul a dépassé une valeur préprogrammée, par exemple 4000 pas de calcul, correspondant à 40s à un rythme d'acquisition à 100Hz des données d'entrée, compare alors les valeurs filtrées $\hat{F}_{rk}$ à une valeur de référence également préenregistrée dans le calculateur. Si la valeur $\hat{F}_r$ reçue par le dispositif d'alerte 10 devient supérieure à la valeur de référence, le dispositif d'alerte affiche un signal d'alerte au tableau de bord.

Outre son utilisation pour la surveillance du niveau de gonflage des pneumatiques, la valeur filtrée $\hat{F}_r$ de résistance au roulement peut être utilisée pour calculer d'autres paramètres de roulage du véhicule, par exemple pour estimer la consommation en carburant du véhicule, ou pour améliorer les systèmes de contrôle de trajectoire, tels que le système ESP.

L'invention ne se limite pas aux exemples de réalisation décrits, et peut se décliner en de nombreuses variantes.

Si le véhicule n'est pas équipé d'un dispositif permettant d'estimer la pente de la route parcourue, l'estimation de la résistance théorique instantanée au roulement selon l'équation (1) peut se faire en omettant les termes en M.g.sin$\alpha$.

Dans ce cas, le message d'alerte pourra prévenir le conducteur que la valeur de résistance au roulement détectée est anormale pour un roulage sur route plane, à charge pour le conducteur de décider s'il doit tenir compte ou non du message d'alerte.

Si le véhicule est équipé d'un accéléromètre, par exemple intégré à un système de type ESP, le calcul de la résistance filtrée peut être interrompu quand un roulage en pente est détecté. On peut par exemple considérer qu'un roulage en pente est détecté, si l'accélération linéaire mesurée par l'accéléromètre, diffère de plus d'un certain seuil en valeur relative, d'une accélération estimée à partir d'une ou plusieurs vitesses de rotation des roues du véhicule. Le calcul peut ensuite reprendre à partir de la dernière valeur filtrée estimée, enregistrée avant qu'un roulage en pente soit détecté.

De manière similaire, l'estimation de la résistance au roulement peut être interrompue à chaque fois qu'une accélération transversale estimée devient supérieure en valeur absolue à un seuil d'accélération transversale, car le couple transmis aux deux roues motrices n'est plus alors strictement égal à la moitié du couple moteur. L'accélération transversale peut par exemple être estimée à partir des vitesses de rotation des roues, comme décrit dans la demande de brevet FR 2 802 646.

Si le véhicule est équipé d'un dispositif lui permettant d'estimer la valeur de l'inclinaison du véhicule, par exemple à l'aide d'accéléromètres ou par une méthode d'estimation indirecte, le calculateur peut être programmé pour prendre en compte le terme $M.g.\sin\alpha$ dans l'estimation de la résistance au roulement théorique instantané selon l'équation (1).

Le calculateur 7 peut être un calculateur dédié, ou être un sous-programme d'une unité de contrôle électronique effectuant d'autres opérations de contrôle, par exemple un sous programme de l'unité de gestion 6. L'estimation de la vitesse linéaire du véhicule et/ou de l'accélération linéaire du véhicule peut être effectuée par une unité de calcul séparée, à partir des vitesses de rotation des roues non motrices. Selon une variante de réalisation, cette unité de calcul peut être intégrée au calculateur. On considère alors que pour le calculateur, recevoir en données d'entrée les vitesses de rotation des deux roues non motrices équivaut à recevoir en données d'entrée la vitesse et/ou l'accélération linéaire du véhicule.

Pour effectuer le filtrage de la valeur instantanée de résistance au roulement, on pourrait choisir une autre suite de facteurs de récursivité, par exemple $L(k)$ = constante= 0,5.

Le dispositif de surveillance selon l'invention permet, en utilisant les capteurs déjà présents sur le véhicule, à l'aide d'algorithmes nécessitant une puissance de calcul et une quantité de mémoire limitées, de détecter de manière fiable une variation de la résistance au roulement d'une ou de deux roues motrices du véhicule. La variation de la résistance au roulement peut alors être interprétée, suivant le contexte des conditions de roulage, comme une chute anormale de la pression du ou des deux pneus concernés.

## Revendications

1. Dispositif d'estimation de la résistance au roulement d'une roue (2) de véhicule automobile (1), appliqué à un système de surveillance de la pression de gonflage des pneumatiques, comprenant un calculateur (7) configuré pour calculer pendant le roulage du véhicule, une valeur instantanée de résistance au roulement ($F_r$) comme un polynôme à coefficients constants de valeurs d'entrées du calculateur ($T$, $\Omega_3+\Omega_4$, $\Omega_2$, $\dot{v}$, $\dot{\Omega}_2$) parmi lesquelles un couple moteur appliqué aux roues du véhicule, une vitesse linéaire du véhicule, une vitesse angulaire de rotation de la roue, une accélération linéaire du véhicule, et une accélération angulaire de la roue.

2. Dispositif d'estimation selon la revendication 1, dans lequel le polynôme est la somme d'une combinaison linéaire des variables d'entrée autres que la vitesse linéaire, et d'un polynôme de la vitesse linéaire comprenant au moins un terme d'exposant 2.

3. Dispositif d'estimation selon les revendications 1 ou 2, dans lequel le calculateur est configuré pour utiliser comme valeurs d'entrée pour l'estimation de la valeur instantanée de résistance au roulement d'une roue motrice du véhicule, l'accélération angulaire de cette roue motrice ($\dot{\Omega}_2$), et une vitesse linéaire qui est obtenue en multipliant la moyenne des vitesses angulaires $(\dfrac{\Omega_3 + \Omega_4}{2})$ de deux roues non motrices du véhicule, par un coefficient constant.

4. Dispositif d'estimation selon l'une des revendications 1 à 3, dans lequel le calculateur est configuré pour calculer de manière itérative une résistance au roulement filtrée ($\hat{F}_{rk}$), à partir d'une seule valeur filtrée de résistance au roulement calculée au pas de calcul précédent ($\hat{F}_{r(k-1)}$), et à partir d'une valeur instantanée de résistance au roulement ($F_{rk}$), réactualisée depuis le dernier calcul de valeur filtrée ($\hat{F}_{r(k-1)}$).

**5.** Dispositif d'estimation selon la revendication 4, dans lequel le calculateur est configuré pour calculer la résistance filtrée au roulement de manière itérative, la résistance filtrée estimée à un pas de calcul (k) étant égale à la somme du polynôme des variables d'entrée actualisées, multiplié par un facteur de récursivité (L(k)), et de la résistance filtrée estimée au pas de calcul (k-1) précédent, multiplié par le complément à un de ce facteur de récursivité (1-L(k)).

**6.** Dispositif d'estimation selon la revendication 5, dans lequel le facteur de récursivité au pas de calcul courant (k), est calculé comme le quotient du facteur de récursivité au pas de calcul (k-1) précédent, par la somme d'un facteur d'oubli constant et du facteur de récursivité obtenu au pas de calcul (k-1) précédent.

**7.** Dispositif d'estimation selon la revendication 6, dans lequel le calculateur est configuré pour initialiser le facteur de récursivité à une valeur comprise entre zéro et 0,1 au début d'une procédure d'évaluation de la résistance au roulement filtrée ($\hat{F}_{rk}$).

**8.** Dispositif de surveillance de l'état de gonflage du pneumatique d'une roue de véhicule automobile, comprenant un dispositif d'estimation de la résistance au roulement de la roue selon l'une des revendications précédentes, et comprenant un dispositif d'alerte (10) configuré pour émettre un signal d'alerte si la résistance au roulement estimée ($\hat{F}_{rk}$) devient supérieure ou égale à une valeur seuil.

**9.** Procédé d'estimation de la résistance au roulement d'une roue de véhicule automobile appliqué à un système de surveillance de la pression de gonflage des pneumatiques, dans lequel on évalue une valeur filtrée ($\hat{F}_{rk}$) de résistance au roulement à partir d'un couple appliqué aux roues du véhicule, d'une vitesse linéaire du véhicule, d'une accélération linéaire du véhicule, de la vitesse angulaire de rotation de la roue du véhicule, et de l'accélération angulaire de la roue, en estimant une valeur théorique instantanée ($F_r$) de la résistance au roulement en fonction d'une valeur instantanée de chacune des données d'entrée précédentes, puis en calculant une valeur filtrée ($\hat{F}_{rk}$) de résistance au roulement comme un barycentre à coefficients récursifs (L(k), 1-L(k)), entre la valeur théorique instantanée de la résistance et la valeur filtrée de résistance obtenue au pas de calcul précédent.

**10.** Procédé selon la revendication 9, dans lequel on utilise la valeur filtrée ($\hat{F}_{rk}$) de résistance au roulement pour surveiller l'état de gonflage du pneumatique de la roue (2).

**Patentansprüche**

**1.** Vorrichtung zur Schätzung des Rollwiderstands eines Rads (2) eines Kraftfahrzeugs (1), angewandt an ein Überwachungssystem des Aufblasdrucks der Reifen, die einen Rechner (7) umfasst, der konfiguriert ist, um während des Fahrens des Fahrzeugs einen Rollwiderstandsmomentanwert ($F_r$) als ein Polynom mit konstanten Koeffizienten von Eingabewerten des Rechnern ($T$, $\Omega_3 + \Omega_4$, $\Omega_2$, $\dot{v}$, $\dot{\Omega}_2$) zu berechnen, darunter ein Antriebsdrehmoment, das an die Räder des Fahrzeugs angelegt wird, eine lineare Geschwindigkeit des Fahrzeugs, eine Rotationswinkelgeschwindigkeit des Rads, eine lineare Beschleunigung des Fahrzeugs und eine Winkelbeschleunigung des Rads.

**2.** Schätzungsvorrichtung nach Anspruch 1, wobei das Polynom die Summe der linearen Kombination der anderen Eingabevariablen als die lineare Geschwindigkeit und eines Polynoms der linearen Geschwindigkeit, das mindestens ein Glied mit Exponenten 2 umfasst, ist.

**3.** Schätzungsvorrichtung nach den Ansprüchen 1 oder 2, wobei der Rechner konfiguriert ist, um als Eingabewerte für die Schätzung des Rollwiderstandsmomentanwerts eines Antriebsrads des Fahrzeugs die Winkelbeschleunigung dieses Antriebsrades ($\dot{\Omega}_2$) und eine lineare Geschwindigkeit zu verwenden, die man erhält, indem der Durchschnitt der Winkelgeschwindigkeiten $\left( \dfrac{\Omega_3 + \Omega_4}{2} \right)$ von zwei nicht antreibenden Rädern des Fahrzeugs mit einem konstanten Koeffizienten multipliziert wird.

**4.** Schätzungsvorrichtung nach einem der Ansprüche 1 bis 3, wobei der Rechner konfiguriert ist, um iterativ einen gefilterten Rollwiderstand ($\hat{F}_{rk}$) ausgehend von einem einzigen gefilterten Rollwiderstandswert zu berechnen, der im vorhergehenden Berechnungsschritt ($\hat{F}_{r(k-1)}$); berechnet wurde, und ausgehend von einem Rollwiderstandsmomentanwert ($F_{rk}$), der ab der letzten Berechnung des gefilterten Werts ($\hat{F}_{r(k-1)}$) aktualisiert wurde.

5. Schätzungsvorrichtung nach Anspruch 4, wobei der Rechner konfiguriert ist, um den gefilterten Rollwiderstandswert iterativ zu berechnen, wobei der gefilterte Widerstand, der bei einem Berechnungsschritt (k) geschätzt wird, gleich der Summe des Polynoms der aktualisierten Eingabevariablen multipliziert mit einem Rekursionsfaktor (L(k)) und dem im vorhergehenden Berechnungsschritt (k-1) geschätzten gefilterten Widerstand, multipliziert mit dem Einerkomplement dieses Rekursionsfaktors (1-L(k)) ist.

6. Schätzungsvorrichtung nach Anspruch 5, wobei der Rekursionsfaktor bei dem aktuellen Berechnungsschritt (k) als der Quotient des Rekursionsfaktors bei dem vorhergehenden Berechnungsschritt (k-1) durch die Summe eines konstanten Vergessensfaktors und des Rekursionsfaktors, der bei dem vorhergehenden Berechnungsschritt (k-1) erzielt wurde, berechnet wird.

7. Schätzungsvorrichtung nach Anspruch 6, wobei der Rechner konfiguriert ist, um den Rekursionsfaktor zu Beginn einer Schätzungsvorgehensweise des gefilterten Rollwiderstands $(\hat{F}_{rk})$ auf einen Wert zwischen null und 0,1 zu initialisieren.

8. Überwachungsvorrichtung des Aufblaszustands des Reifens eines Kraftfahrzeugrads, die eine Schätzungsvorrichtung des Rollwiderstands des Rads nach einem der vorhergehenden Ansprüche umfasst und, eine Warnvorrichtung (10) umfasst, die konfiguriert ist, um ein Warnsignal auszugeben, wenn der geschätzte Rollwiderstand $(\hat{F}_{rk})$ größer oder gleich einem Schwellenwert wird.

9. Schätzungsverfahren des Rollwiderstands eines Kraftfahrzeugrads, angewandt an ein Überwachungssystem des Aufblasdrucks der Reifen, bei dem man einen gefilterten Rollwiderstandswert $(\hat{F}_{rk})$ ausgehend von einem Drehmoment, das an die Räder des Fahrzeugs angelegt wird, einer linearen Geschwindigkeit des Fahrzeugs, einer linearen Beschleunigung des Fahrzeugs, der Rotationswinkelgeschwindigkeit des Rads des Fahrzeugs und der Winkelbeschleunigung des Rads berechnet, indem man einen theoretischen Momentanwert $(F_r)$ des Rollwiderstands in Abhängigkeit von einem Momentanwert jeder der vorhergehenden Eingabedaten schätzt, dann durch Berechnen eines gefilterten Rollwiderstandswerts $(\hat{F}_{rk})$ als ein Massenmittelpunkt mit rekursiven Koeffizienten (L(k), 1-L(k)) zwischen dem theoretischen Momentanwert des Widerstands und dem gefilterten Widerstandswert, der bei dem vorhergehenden Berechnungsschritt erzielt wurde.

10. Verfahren nach Anspruch 9, bei dem man den gefilterten Rollwiderstandswert $(\hat{F}_{rk})$ verwendet, um den Aufblaszustand des Reifens des Rads (2) zu überwachen.

**Claims**

1. Device for estimating the rolling resistance of a wheel (2) of a motor vehicle (1), applied to a tyre pressure monitoring system, comprising a computer (7) configured to calculate, while the vehicle is running, an instantaneous rolling resistance value $(F_r)$ as a polynomial with constant coefficients of computer input values $(T, \Omega_3 + \Omega_4, \Omega_2, \dot{v}, \dot{\Omega}_2)$ which include an engine torque applied to the wheels of the vehicle, a linear speed of the vehicle, an angular velocity that is the rotational speed of the wheel, a linear acceleration of the vehicle, and an angular acceleration of the wheel.

2. Estimating device according to Claim 1, in which the polynomial is the sum of a linear combination of the input variables other than the linear speed and of a polynomial of the linear speed comprising at least one second-degree term.

3. Estimating device according to Claim 1 or 2, in which the computer is configured to use, as input values for estimating the instantaneous value of the rolling resistance of a driven wheel of the vehicle, the angular acceleration of this driven wheel $(\dot{\Omega}_2)$ and a linear speed which is obtained by multiplying the mean of the angular velocities

$(\dfrac{\Omega_3 + \Omega_4}{2})$ of two non-driven wheels of the vehicle, by a constant coefficient.

4. Estimating device according to one of Claims 1 to 3, in which the computer is configured to calculate a filtered rolling resistance $(\hat{F}_{rk})$ iteratively from a single filtered rolling-resistance value calculated in the preceding calculation step $(\hat{F}_{r(k-1)})$, and from an instantaneous rolling resistance value $(F_{rk})$ reupdated since the last calculation of filtered value $(\hat{F}_{r(k-1)})$.

5. Estimating device according to Claim 4, in which the computer is configured to calculate the filtered rolling resistance iteratively, the filtered resistance estimated at a calculation step (k) being equal to the sum of the polynomial of the updated input variables, multiplied by a recursion factor (L(k)), and of the filtered resistance estimated at the previous calculation step (k-1), multiplied by the one's complement of this recursion factor (1-L(k)).

6. Estimating device according to Claim 5, in which the recursion factor at the current calculation step (k) is calculated as the quotient of the recursion factor at the previous calculation step (k-1) by the sum of a constant forgetting factor and of the recursion factor obtained at the previous calculation step (k-1).

7. Estimating device according to Claim 6, in which the computer is configured to initialise the recursion factor to a value of between 0 and 0.1 at the start of a procedure of evaluating the filtered rolling resistance ($\hat{F}_{rk}$).

8. Device for monitoring the inflation status of a tyre of a wheel of a motor vehicle, comprising a device for estimating the rolling resistance of the wheel according to one of the preceding claims, and comprising a warning device (10) configured to emit a warning signal if the estimated rolling resistance ($\hat{F}_{rk}$) becomes greater than or equal to a threshold value.

9. Method for estimating the rolling resistance of a wheel of a motor vehicle, applied to a tyre pressure monitoring system, in which a filtered value ($\hat{F}_{rk}$) of rolling resistance is evaluated from a torque applied to the wheels of the vehicle, from a linear speed of the vehicle, from a linear acceleration of the vehicle, from the angular velocity that is the rotational speed of the wheel of the vehicle, and from the angular acceleration of the wheel, by estimating an instantaneous theoretical value ($F_r$) of rolling resistance as a function of an instantaneous value of each of the preceding input data, then by calculating a filtered value ($\hat{F}_{rk}$) of rolling resistance as a centre of mass with recursive coefficients (L(k), 1-L(k)), between the instantaneous theoretical value of the resistance and the filtered resistance value obtained at the previous calculation step.

10. Method according to Claim 9, in which the filtered rolling-resistance value ($\hat{F}_{rk}$) is used for monitoring the inflation status of the tyre of the wheel (2).

# FIG.1

# FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2938468
- FR 037030 A2

- FR 2802646